# FASCICULE DE BREVET EUROPEEN

(11) **EP 0 839 122 B1**
(45) Date de publication et mention de la délivrance du brevet: **09.07.2003**
(21) Numéro de dépôt: 97924095.9
(22) Date de dépôt: 14.05.1997
(51) Int. Cl.: C03C 17/34

(54) **VITRAGE A REVETEMENT ANTIREFLET**
GLASSCHEIBE MIT ANTIREFLEKTIERENDER BESCHICHTUNG
GLAZING WITH AN ANTI-REFLECTIVE COATING

(30) Priorité: 14.05.1996 FR 9605995
(43) Date de publication de la demande: 06.05.1998
(73) Titulaire: SAINT-GOBAIN GLASS FRANCE, 92400 Courbevoie (FR)
(72) Inventeur: BOIRE, Philippe, F-75015 Paris (FR); ZAGDOUN, Georges, F-92250 La Garenne Colombes (FR)
(74) Mandataire: Renous Chan, Véronique
(86) Numéro de dépôt international: FR9700857
(87) Numéro de publication internationale: WO97043224

(56) Documents cités:
- EP-A- 0 492 785
- EP-A- 0 520 720
- WO-A-94/25410
- FR-A- 2 713 624
- PATENT ABSTRACTS OF JAPAN vol. 9, no. 183 (M-400) [1906] , 30 Juin 1985 & JP 60 050022 A (TOYOTA JIDOSHA KK), 19 Mars 1985,

## Description

L'invention concerne les substrats transparents, plus particulièrement les substrats verriers, destinés à être incorporés dans des vitrages et munis de revêtements antireflet.

Un revêtement antireflet est usuellement constitué d'un empilement de couches minces interférentielles, en général une alternance de couches à base de matériau diélectrique à forts et faibles indices de réfraction. Déposé sur un substrat transparent, un tel revêtement a pour fonction d'en diminuer sa réflexion lumineuse, donc d'en augmenter sa transmission lumineuse. Un substrat ainsi revêtu voit donc s'accroître son ratio lumière transmise/lumière réfléchie, ce qui améliore la visibilité des objets placés derrière lui. Pour obtenir un effet antireflet maximal, il est recommandé de munir chacune des faces du substrat de ce type de revêtement.

Une des applications les plus connues de ce type de produit est la protection des tableaux éclairés par une lumière placée derrière l'observateur. Un vitrage à effet antireflet est également très intéressant pour équiper des bâtiments, par exemple en tant que vitrine de magasin, afin de mieux distinguer ce qui se trouve dans la vitrine même lorsque l'éclairage intérieur est faible par rapport l'éclairage extérieur, ou en tant que verre de comptoir.

Il serait aussi utile d'employer ce type de produit en tant que vitrage de véhicule, notamment de voiture, et plus particulièrement en tant que pare-brise, les normes imposant des niveaux élevés de transmission lumineuse.

Ce qui limite actuellement l'utilisation de vitrages antireflet dans les bâtiments ou pour équiper des véhicules, c'est le niveau de durabilité mécanique et chimique qui est nécessaire pour de telles applications. En effet, le revêtement antireflet va se trouver disposé dans le vitrage au moins sur sa face 1, c'est-à-dire la face du vitrage tournée vers l'extérieur de la pièce ou de l'habitacle (conventionnellement, on numérote chacune des faces des substrats verriers constituant un vitrage donné en commençant par la face qui se trouve tournée vers l'extérieur). Or cette face du vitrage est soumise à beaucoup de sollicitations ; ainsi, dans le bâtiment, elle est soumise aux aléas climatiques et au nettoyage par des moyens plus ou moins abrasifs et/ou par des produits chimiques plus ou moins corrosifs. Le problème de durabilité est peut-être encore plus flagrant pour les vitrages pour véhicules : le pare-brise est soumis à l'effet abrasif du va-et-vient des essuie-glaces, aux projections diverses de poussières ou gravillons, et l'ensemble des vitrages latéraux de véhicules se trouve soumis aux frottements répétés avec les lèvres en caoutchouc des portières.

Or, jusqu'ici, la majorité des revêtements antireflet proposés est obtenue par dépôt de couches minces à l'aide de techniques utilisant le vide, par exemple de techniques du type pulvérisation cathodique. Ce type de technique de dépôt conduit à l'obtention de couches minces de bonne qualité, notamment optique, mais qui présentent souvent une durabilité inférieure à celle qui serait requise pour les applications envisagées plus haut. En outre, ces techniques s'utilisent en reprise, c'est-à-dire en discontinu sur les plateaux de verre une fois découpés à partir du ruban de verre issu d'une ligne de production float.

Le but de l'invention est alors de pallier ces inconvénients, en cherchant à mettre au point un nouveau type de revêtement multicouche à effet antireflet qui soit performant optiquement et qui, en outre, présente une haute durabilité mécanique et chimique.

L'invention a pour objet un vitrage selon l'objet de la revendication 1. Le vitrage comporte sur au moins une de ses faces extérieures un revêtement antireflet, désigné ci-après sous le terme de revêtement « A », et qui comprend un empilement de couches de matériaux d'indices de réfraction alternativement forts et faibles. L'empilement est conçu de manière à ce qu'au moins une partie des couches qui le constituent soient des couches pyrolysées, de préférence au moins la dernière couche.

On peut par exemple prévoir que les premières sont pyrolysées et que la ou les dernières sont déposées sous vide.

Avantageusement toutes les couches de l'empilement sont des couches pyrolysées.

Dans le cadre de l'invention, on comprend par faces « extérieures », les faces du vitrage au contact avec l'atmosphère (à opposer aux faces dites « internes » qui sont notamment celles en contact avec la feuille intermédiaire en polymère dans un vitrage à structure feuilletée).

L'intérêt d'avoir recours à des couches pyrolysées est triple :
□ d'une part par pyrolyse, qu'elle soit en phase liquide, pulvérulente ou gazeuse (cette dernière étant souvent désignée sous le sigle CVD signifiant « Chemical Vapor Déposition »), on peut obtenir un vaste choix de matériaux du type oxyde, nitrure ou carbure, ou un mélange d'au moins deux de ces types de composés, présentant les indices de réfraction adéquats pour être incorporés dans un revêtement antireflet,
□ d'autre part, des couches pyrolysées, et c'est ce qui intéresse tout particulièrement la présente invention, présentent une durabilité chimique et mécanique généralement très élevée. De par le fait qu'elles ont été obtenues par décomposition de précurseurs à très hautes températures sur verre chaud, elles sont particulièrement solides, denses, adhérentes fortement au substrat, et résistent donc bien aux agressions mécaniques du type abrasion/frottement ou aux agressions chimiques, notamment par mise au contact d'eau, de gaz polluants, de détergents agressifs. Ce qui est très avantageux, pour garantir la durabilité de l'ensemble de l'empilement de couches, c'est que la dernière couche soit ainsi pyrolysée. Le plus simple est alors de déposer toutes les couches par pyrolyse : en effet, et c'est le troisième intérêt de la pyrolyse, ce type de dépôt peut s'effectuer en continu, directement sur le ruban de verre chaud d'une ligne float : il suffit alors d'aligner autant de buses de projection de précurseurs que de couches à déposer sur la ligne pour obtenir l'empilement recherché. Il n'est cependant pas exclu du cadre de l'invention de ne déposer par pyrolyse que la dernière ou les « n » dernières couches de l'empilement, et de déposer par une autre technique de dépôt la ou les premières couches. Cette autre technique peut par exemple être une technique sous vide du type pulvérisation cathodique ou une technique du type sol-gel. Il n'est pas non plus exclu de déposer par pyrolyse, une autre couche de l'empilement, notamment la ou les premières, et de déposer par une autre technique de dépôt la ou les dernières couches.

Cette autre technique peut par exemple être également une technique sous vide.

Comme on l'a évoqué précédemment, un effet partiel antireflet peut être obtenu en n'ayant recours qu'à un seul revêtement antireflet par vitrage. Il est cependant connu que l'effet optimal est obtenu en munissant le vitrage non pas d'un mais de deux revêtements antireflet, un sur chacune de ses faces extérieures (donc en faces 1 et 2 s'il s'agit d'un vitrage composé d'un unique substrat ou en faces 1 et 4 s'il s'agit d'un vitrage multiple du type vitrage feuilleté à deux substrats verriers).

Plusieurs choix s'offrent donc dans l'invention pour obtenir cet effet antireflet optimal :
□ on peut notamment munir l'autre face extérieure du vitrage d'un revêtement antireflet « A' » similaire ou même identique au revêtement « A », comportant donc également au moins une couche pyrolysée, notamment au moins la dernière. Ainsi, quand le vitrage est à structure feuilletée, il suffit alors d'assembler à l'aide d'une feuille de polymère deux substrats chacun muni d'un empilement de type « A », les deux empilements ayant pu tous deux être fabriqués directement sur le ruban de verre float.

S'il s'agit d'un vitrage monolithique, le premier empilement « A » peut être obtenu sur float, et le second en reprise, soit également par pyrolyse, soit par une autre technique comme la pulvérisation cathodique ou la technique sol-gel (en masquant le revêtement antireflet déjà déposé).

L'autre face du vitrage est muni d'un revêtement antireflet, ci-après désigné sous le terme de revêtement « B », qui comporte également un empilement de couches de matériaux d'indice de réfraction alternativement forts et faibles, mais déposé par une technique utilisant le vide telle que la pulvérisation cathodique. Avoir recours à un second empilement antireflet non pyrolysé peut en effet présenter certains avantages : quand le vitrage est dit monolithique, composé que d'un seul substrat verrier, il peut être intéressant de déposer le premier revêtement antireflet de type « A » en continu sur le ruban de verre float, puis de déposer le second revêtement antireflet du type « B » par un dépôt sous vide en reprise sans réchauffer le substrat. On peut souligner que dans ce cas de figure, la durabilité mécanique excellente de l'empilement antireflet « A » est très avantageuse : on peut déplacer le substrat le long d'une ligne de dépôt sous vide sur des rouleaux convoyeurs, avec l'empilement se trouvant au contact des rouleaux, sans que celui-ci ne se dégrade malgré les frottements inévitables entre substrat et rouleaux. Par ailleurs, souvent l'une des deux faces extérieures du vitrage, en général la face tournée vers l'intérieur de la pièce pour un vitrage bâtiment ou vers l'intérieur de l'habitacle pour un vitrage de véhicule, est moins sollicitée sur le plan chimique ou mécanique : on peut donc « se permettre » d'employer un empilement antireflet « B » présentant une durabilité inférieure à celle d'un empilement de type « A » mais qui peut néanmoins être suffisante.

Comme exemples d'empilements antireflet de type « B » susceptibles d'être déposés par une technique sous vide, on peut se reporter avantageusement à la demande de brevet européen déposée le 22 février 1996 sous le numéro 96/400367.7 (EP-A-0 911 302) correspondant à la demande de brevet français 95/02102 (FR-A-2 730 990), qui décrit un empilement antireflet présentant en outre la particularité intéressante de pouvoir subir sans détérioration des traitements thermiques du substrat porteur du type bombage/trempe ou recuit : il s'agit notamment « d'isoler » du substrat les couches susceptibles de se détériorer à haute température par migration d'alcalins du verre (comme Nb₂O₅, WO₃, Bi₂O₃ ou CeO₂) à l'aide d'une couche « écran » faisant partie de l'empilement, notamment une couche à faible indice du type SiO₂, Al₂O₃:F ou un mélange de ces deux composés, ou encore une couche à fort indice comme Si₃N₄ ou AIN, ou encore une couche à indice intermédiaire notamment à base d'un mélange d'oxyde de Si et Sn, Si et Zn, Si et Ti ou encore à base de SiOₓN_{y}.

On peut aussi se reporter avantageusement à la demande de brevet français déposée le 22 février 1996 sous le numéro 96/02194, (EP-A-2 745 284) décrivant un empilement antireflet également susceptible d'être déposé par une technique sous vide et utilisant des couches à bas-indice du type fluorure ou oxyfluorure d'aluminium AlₓO_{y}F_{z}, avec y ≥ 0.

De manière générale, les couches dites à faible indice usuellement déposées par des techniques sous vide sont choisies par exemple parmi SiO₂, MgF₂ et les couches dites à fort indice par exemple parmi Ta₂O₅, TiO₂, Nb₂O₅, ZrO₂, SnO₂, ZnO, WO₃.

De préférence, les revêtements antireflet de type « A » selon l'invention, (et également, éventuellement, les revêtements antireflet de type « B » qui y sont associés) sont conçus de manière à ce que, d'une part, les couches dites à faible indice aient un indice de réfraction compris entre 1,35 et 1,70, de préférence entre 1,38 et 1,65 ; et d'autre part les couches dites à fort indice aient un indice de réfraction d'au moins 1,85 notamment compris entre 1,90 et 2,60, de préférence entre 2,10 et 2,45. L'effet antireflet n'est en effet pleinement réalisé que s'il y a une différence d'indices de réfraction significative entre les couches à forts et faibles indices en contact les unes avec les autres.

Selon un mode de réalisation particulier de l'invention, la première séquence de couches « couche à fort indice/couche à faible indice » du revêtement antireflet « A » (et éventuellement aussi du revêtement antireflet de type « B » lorsqu'il est utilisé) est remplacée par une seule couche dite à indice « intermédiaire », notamment compris entre 1,70 et 1,85 : une telle couche a un effet optique très similaire à une séquence haut indice/bas indice. Le matériau susceptible de présenter un tel indice peut être choisi à base d'oxyde d'étain, d'oxynitrure et/ou oxycarbure de silicium SiOₓC_{y} et/ou SiOₓN_{y}, ou à base d'un mélange d'oxydes par exemple un mélange d'oxyde de silicium et d'étain, de silicium et de zinc, de silicium et de titane, la proportion relative des deux types d'oxydes permettant d'ajuster l'indice de réfraction à la valeur voulue.

Pour réaliser le revêtement antireflet « A » selon l'invention, on choisit de préférence des couches pyrolysées à faible indice de réfraction constituées d' un matériau diélectrique ou un mélange de matériaux diélectriques choisis dans le groupe comprenant l'oxyde de silicium, l'oxynitrure et/ou l'oxycarbure de silicium SiOₓN_{y} et/ou SiOₓC_{y}, ou encore un oxyde mixte de silicium et d'aluminium comprenant également au moins un troisième élément M facilitant la formation d'une structure d'oxyde mixte homogène. Cet élément M est notamment un halogène du type fluor, et la couche peut également comprendre un quatrième élément, notamment du carbone. Pour plus de détails sur la composition de cet oxyde mixte, on se rapportera avantageusement à la demande de brevet français FR-A-2 727 107 correspondant à la demande européenne 95/402612.6 (EP-A-0 712 815) qui décrit également son mode d'obtention préféré, qui est une technique CVD. Cette couche est de préférence utilisée dans l'invention pour constituer la dernière couche à faible indice du revêtement antireflet, car elle s'est avérée extrêmement résistante.

Le choix des couches pyrolysées à fort indice peut avantageusement se porter sur des matériaux diélectriques ou des mélanges de matériaux diélectriques appartenant au groupe comprenant TiO₂, SnO_{2,} ZnO, ZrO₂ ou Ta₂O₅.

Comme évoqué précédemment, le vitrage de l'invention peut être composé d'un seul revêtement antireflet sur l'une de ses faces, notamment en face 1, et soit un revêtement « A' » de même type, soit un revêtement « B » sur la face opposée, notamment la face 2. S'il s'agit d'un vitrage feuilleté usuel, avec deux substrats verriers assemblés par une feuille de matériau polymère du type PVB (polyvinylbutyral), il a de préférence sur une de ses faces, notamment la face 1 un revêtement « A », et sur l'autre face extérieure, notamment la face 4 soit un revêtement « A' » de même type, soit un revêtement de type « B ».

On peut noter par ailleurs que les revêtements antireflet selon l'invention peuvent aussi s'appliquer aux vitrages feuilletés dits asymétriques, comportant au moins un substrat verrier et au moins une feuille de polymère à propriétés d'absorption d'énergie comme le polyuréthane.

Le choix de la nature du ou des substrats verriers constitutifs du vitrage peut aussi s'avérer important : on peut combiner les propriétés optiques et/ou thermiques intrinsèque(s) au(x) substrat(s) verrier(s) avec les propriétés optiques du ou des revêtement(s) antireflet pour obtenir un vitrage présentant globalement les performances voulues.

Ainsi, les substrats peuvent être choisis en verre clair, par exempte comme ceux vendus sous l'appellation commerciale Planilux par la société SAINT-GOBAIN VITRAGE. L'effet additionnel d'augmentation de la transmission lumineuse dû au(x) revêtement(s) antireflet permet alors d'obtenir des vitrages extrêmement transparents.

Mais on peut également choisir les substrats constituant les vitrages, en verre présentant des propriétés de transmission énergétique réduite, notamment des verres teintés dans la masse. Au prix d'une certaine baisse de la transmission lumineuse on obtient des vitrages de protection solaire intéressants, l'effet d'augmentation de la transmission lumineuse obtenu grâce au(x) revêtement(s) antireflet permettant avantageusement d'atténuer cette baisse de niveau de transparence. Des vitrages teintés dans la masse, notamment adaptés au bâtiment, sont par exemple commercialisés sous l'appellation « Parsol » par la société SAINT-GOBAIN VITRAGE. D'autres types de verre à transmission énergétique réduite sont également intéressants dans la cadre de la présente invention.

Il s'agit notamment de verres de couleur bronze, comme décrits dans les brevets US-4 190 542 et US-4 101 705, ou de verres dont la composition a été ajustée plutôt en vue d'une application vitrage automobile. Il s'agit par exemple de verre appelés TSA⁺ ou TSA⁺⁺, dont les taux en oxydes colorants du type Fe₂O₃, FeO et CoO sont ajustés afin d'avoir une sélectivité définie par le rapport T_{L}/T_{E} d'au moins 1,30, ou même 1,40 à 1,50, et une teinte dans les verts. On se reportera avantageusement pour plus de précisions à la demande de brevet européen EP-A-0 616 883. On rappelle sommairement ci-dessous le taux des oxydes colorants précités dans les compositions de verre selon l'enseignement de ce brevet (proportions pondérales).

Selon une première série :

| | |
|---|---|
| Fe₂O₃ | 0,55 à 0,62 % |
| FeO | 0,11 à 0,16 % |
| CoO | 0 à 12 ppm, notamment < 12 ppm avec notamment le rapport Fe²⁺/Fe de l'ordre de 0,19 à 0,25. |

Selon une seconde série :

| | |
|---|---|
| Fe₂O₃ | 0,75 à 0,90 % |
| FeO | 0,15 à 0,22 % |
| CoO | O à 17 ppm, notamment < 10 ppm avec notamment le rapport Fe²⁺/Fe de l'ordre de 0,20. |

Il peut également s'agir de verres teintés dans la masse, notamment dans les bleu-vert tels que ceux décrits dans la demande de brevet EP-A-0 644 164, dont on rappelle ci-après la composition :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 0,75 à 1,4 % |
| FeO | 0,25 à 0,32 % |
| SO₃ | 0,10 à 0,35 % |

Il peut également s'agir de verres tels que ceux décrits dans la demande PCT déposée sous le numéro PCT/FR95/00828 le 22 juin 1995 correspondant à la demande FR-A-2 721 599, dont la composition, toujours en pourcentages pondéraux, est rappelée ci-dessous :

| | |
|---|---|
| SiO₂ | 69 à 75 % |
| Al₂O₃ | 0 à 3 % |
| B₂O₃ | 0 à 5 % |
| CaO | 2 à 10 % |
| MgO | 0 à 2 % |
| Na₂O | 9 à 17 % |
| K₂O | 0 à 8 % |
| Fe₂O₃ (fer total) | 0,2 à 4 % |
| Se, CoO, Cr₂O₃, NiO, CuO | 0 à 0,45 % |

la teneur en agents colorants autres que le fer étant au moins égale à 0,0002 % lorsque la teneur en Fe₂O₃ est égale ou inférieure à 1,5 %, cette composition étant susceptible de contenir également du fluor, des oxydes de zinc, de zirconium, de cérium, de titane et moins de 4 % d'oxyde de baryum, la somme des pourcentages des oxydes alcalino-terreux demeurant égale ou inférieure à 10 %.

Toujours selon l'enseignement de ce brevet, il est préféré que les agents colorants autres que le fer soient introduits dans la composition des verres seuls ou en combinaison, selon des teneurs pondérales qui, de préférence, restent inférieures aux limites suivantes :

| | |
|---|---|
| Se | < 0,008 % |
| CoO | < 0,04 % |
| Cr₂O₃ | < 0,1 % |
| NiO | < 0,07 % |
| CuO | < 0,3 %. |

Il peut aussi s'agir de verres tels que ceux décrits dans la demande PCT/FR96/00394 déposée le 14 mars 1996 et correspondant à la demande de brevet français déposée le 16 mars 1995 sous le numéro 95/03858, verres comprenant, exprimé en pourcentages pondéraux, de 0,85 à 2% de fer total exprimé sous la forme Fe₂O₃, la teneur pondérale en FeO étant comprise entre 0,21 et 0,40%.

Selon ce brevet, les compositions sont, selon une première série, les suivantes :

| | |
|---|---|
| SiO₂ | 64 à 75 % |
| Al₂O₃ | 0 à 5 % |
| B₂O₃ | 0 à 5 % |
| CaO | 2 à 15 % |
| MgO | 0 à 5 % |
| Na₂O | 9 à 18 % |
| K₂O | 0 à 5 % |
| Fe₂O₃ (fer total exprimé sous cette forme) | 0,85 à 2 % |
| FeO | 0,21 à 0,40 % |
| CoO, Cr₂O₃, Se, TiO₂, MnO, NiO, CuO | 0 à 0,04 % |
| SO₃ | 0,08 à 0,35 % |

et selon une seconde série, les suivantes :

| | |
|---|---|
| SiO₂ | 68 à 75 % |
| Al₂O₃ | 0 à 3 % |
| B₂O₃ | 0 à 5 % |
| CaO | 2 à 10 % |
| MgO | 0 à 2 % |
| Na₂O | 9 à 18 % |
| K₂O | 0 à 8 % |
| Fe₂O₃(fer total exprimé sous cette forme) | 0,95 à 2 % |
| CoO, Cr₂O₃, Se, TiO₂, MnO, NiO, CuO | 0 à 0,04 % |
| FeO | 0,29 à 0,40 % |
| SO₃ | 0,08 à 0,35 % |

Tous ces types de compositions de verre teinté peuvent donc être avantageusement choisis de manière à ce que les vitrages présentent des valeurs de transmission énergétique comprise entre 30 et 70%, notamment entre 35 et 60% et des valeurs de transmission lumineuse comprise entre 50 et 85%.

Les substrats verriers porteurs du ou des empilements antireflet peuvent subir différents traitements thermiques, notamment un bombage, une trempe ou un recuit. Il y a deux cas de figures : soit les revêtements sont déposés après traitement, ce qui empêche le dépôt des couches sur ligne float, (et ce qui est difficile pour des revêtements « A » dont le dépôt impose un réchauffage du verre) soit les revêtements, tout au moins les revêtements de type « A », sont déposés sur ligne et conçus de façon à être aptes à subir ces traitements sans altération de leurs propriétés optiques. Pour les empilements de type « B », a déjà été mentionnée plus haut une configuration présentant ce genre de propriété.

Les vitrages peuvent également comporter au moins un autre type de couche mince ou d'empilement de couches minces à fonction de protection solaire. Il peut s'agir de couches réfléchissantes telles que des couches à base d'argent suffisamment épaisses. Il peut ainsi s'agir d'empilements du type diélectrique / argent/ diélectrique ou diélectrique / argent /diélectrique / argent / diélectrique. Pour plus de précisions sur ces types d'empilements, on pourra se reporter aux demandes de brevet européen EP-A-0 678 484, EP-A-0 645 352 et EP-A-0 638 528. On peut également utiliser des empilements comprenant une couche réfléchissante et/ou filtrante telle qu'une couche de nitrure, comme du nitrure de titane, comme cela est décrit dans les demandes EP-A-0 638 527 et EP-A-0 650 938.

On peut également munir les vitrages selon l'invention d'au moins un revêtement conducteur électrique à fonction d'alarme : il peut consister en une couche conductrice ou un réseau de fils conducteurs, par exemple sérigraphiés à partir d'une pâte à l'argent conductrice, que l'on va connecter à une source de courant par des amenées adhoc. En cas de tentative de rupture du vitrage, si le courant ne passe plus, des moyens déclenchent une alarme sonore et/ou lumineuse.

En fait, on choisira plutôt soit d'utiliser du verre teinté, soit d'utiliser ce type de revêtement de protection solaire, mais dans les deux cas il s'agit bien de combiner leurs propriétés thermiques et optiques, qui sont corrélées, avec les propriétés optiques des revêtements antireflet pour obtenir le vitrage souhaité.

Une configuration préférée de vitrage feuilleté consiste à munir au moins l'une des faces internes des substrats verriers qui le constituent, c'est-à-dire les faces 2 et/ou 3 des revêtements à fonction de protection solaire et/ou à fonction d'alarme.

On peut fonctionnaliser encore le revêtement antireflet « A» (et/ou éventuellement le revêtement antireflet « B ») des vitrages selon l'invention, en le surmontant d'un revêtement à propriétés photocatalytiques à fonction anti-salissures, notamment à base d'oxyde de titane au moins partiellement cristallisé que l'on peut obtenir par CVD, comme cela est décrit dans la demande de brevet français déposée le 15 septembre 1995 sous le numéro FR-95/10839.

Dans le même ordre d'idées, il est également possible de traiter la surface de la dernière couche pyrolysée de l'empilement antireflet de type « A » par des silanes, notamment par la technique de ruissellement afin de diminuer son coefficient de frottement et ainsi, notamment, faciliter le balayage des essuie-glaces dans le cas d'un pare-brise par exemple.

Notamment dans le cas où l'on envisage d'utiliser les vitrages en tant que vitrages intérieurs ou extérieurs pour bâtiments, vitrines, comptoirs de magasin ou en tant que vitrages pour véhicule type automobile autres que le pare-brise (vitres latérales, lunettes arrières, toit-auto), on choisit avantageusement les épaisseurs optiques des couches constituant le ou les empilements antireflet de manière à abaisser la réflexion lumineuse du vitrage à des valeurs inférieures à 1,5%, notamment inférieures à 1,0% à incidence normale. C'est en effet en général le niveau de performances que l'on attend d'un vitrage antireflet.

Pour obtenir de telles valeurs de réflexion lumineuse, les empilements antireflet « A » selon l'invention peuvent comporter, en commençant par la couche se trouvant la plus proche du substrat :
□ deux couches dont :
   - une première couche à fort indice d'épaisseur optique comprise entre 15 et 50 nm, notamment entre 20 et 40 nm,
   - et une seconde couche à faible indice d'épaisseur optique comprise entre 160 et 200 nm, notamment entre 170 et 190 nm,
□ trois couches dont:
   - une première couche d'indice intermédiaire d'épaisseur optique comprise entre 100 et 140 nm, notamment entre 110 et 130 nm,
   - une seconde couche à fort indice, d'épaisseur optique comprise entre 210 et 260 nm, notamment entre 230 et 250 nm,
   - et enfin une troisième couche à faible indice d'épaisseur optique comprise entre 100 et 150 nm, notamment entre 110 et 140 nm.

Notamment dans le cas où l'on envisage d'utiliser le vitrage en tant que pare-brise, notamment feuilleté, pour véhicule du type automobile ou train, la sélection des épaisseurs optiques des couches des empilements antireflet va être un peu différente, car les critères vont varier : en effet, les pare-brise actuels sont fortement inclinés, une optimisation de la réflexion lumineuse ne prenant en compte que des mesures à incidence normale s'avère insuffisante. En outre, les pare-brise doivent concilier deux propriétés, c'est-à-dire présenter à la fois une très haute transmission lumineuse pour des problèmes de sécurité (les normes actuelles imposent une valeur de T_{L} d'au moins 75% à incidence normale) et une transmission énergétique la plus réduite possible, pour éviter un échauffement excessif de l'habitacle en été : pour l'application spécifique des pare-brise, il faut donc chercher à ajuster en fait au plus haut la valeur de la sélectivité T_{L}/T_{E}. On choisit donc pour l'application pare-brise des épaisseurs optiques de couches qui permettent d'obtenir conjointement une valeur de R_{L} inférieure à 7% et même inférieure à 6% à incidence normale, inférieure à 10% à incidence de 60°, une valeur de T_{L} à incidence normale d'au moins 75% et une sélectivité T_{L}/T_{E} d'au moins 1,65, notamment d'au moins 1,70.

Pour respecter l'ensemble de ces critères, le(s) revêtement(s) antireflet « A » de l'invention peuvent avantageusement comporter trois couches, dont, en commençant par la couche la plus proche du substrat :
□ une première couche d'indice intermédiaire d'épaisseur optique comprise entre 160 et 210 nm, notamment entre 180 et 200 nm,
□ une seconde couche à fort indice d'épaisseur optique comprise entre 300 et 350 nm, notamment entre 320 et 340 nm,
□ et une troisième couche à faible indice d'épaisseur optique comprise entre 120 et 170 nm, notamment entre 145 et 165 nm.

L'invention a également pour objet l'utilisation des vitrages précédemment décrits pour d'autres applications que le bâtiment ou les véhicules déjà envisagées, notamment des applications en tant que vitrage de protection d'objets du type tableau, d' écran de protection anti-éblouissement pour ordinateur, de verre décoratif, de mobilier verrier d'ameublement ou de miroir (en lui adjoignant par exemple une couche opacifiante).

Les vitrages revêtus des revêtements antireflet selon l'invention peuvent également être conçus et montés de manière à pouvoir remplir une fonction anti-feu à propriétés pare-flamme : on peut se reporter par exemple avantageusement à la demande de brevet EP-A-0 635 617 ou à la demande de brevet EP-A-0 568 458. Ils peuvent également présenter des propriétés coupe-feu, et sont alors usuellement composés de deux substrats verriers montés dans un cadre à une certaine distance l'un de l'autre, l'espace les séparant étant rempli d'un gel aqueux, comme cela est décrit dans le brevet EP-B-442 768 ou encore le brevet US-4 983 464.

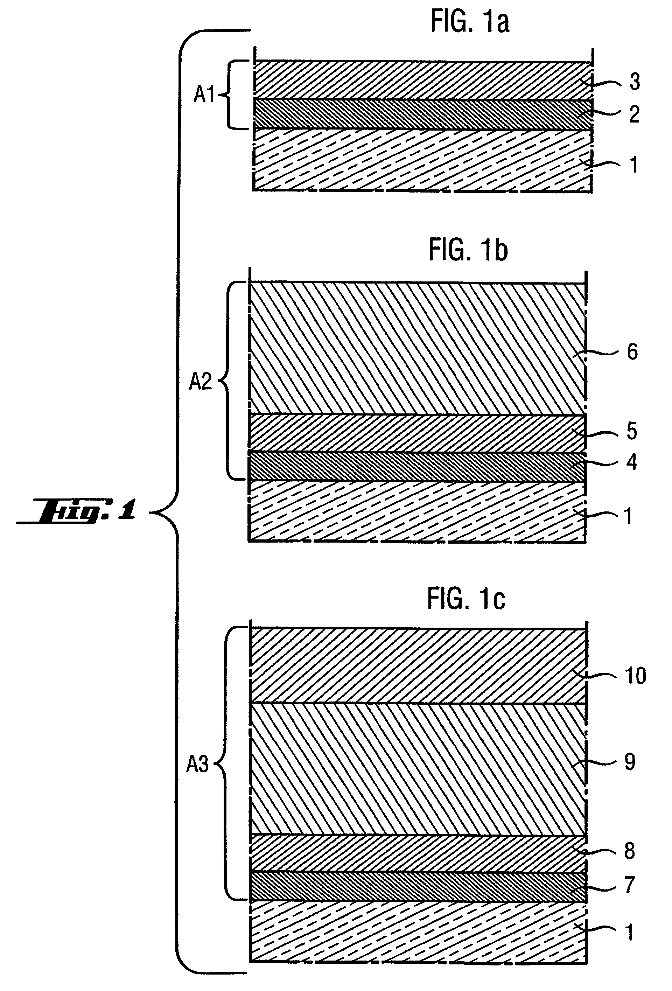

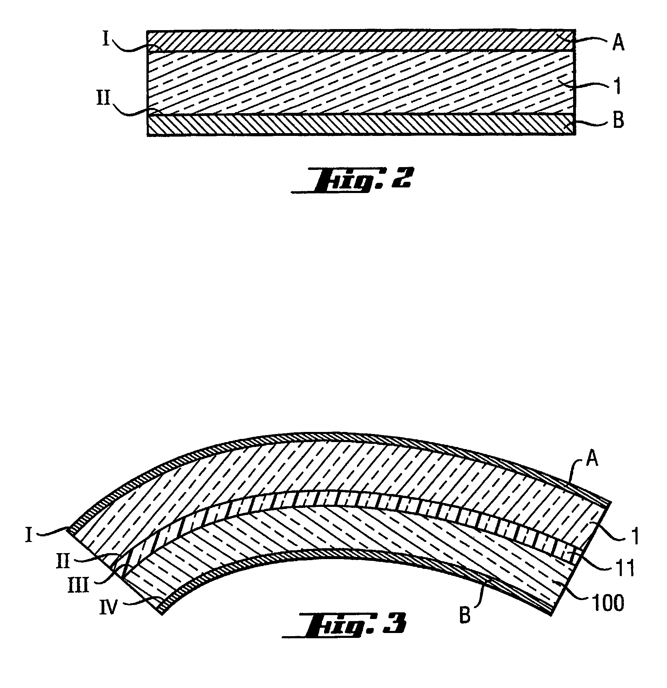

Les détails et caractéristiques avantageuses de l'invention vont maintenant ressortir des exemples suivants non limitatifs, à l'aide des figures annexées :
□ **figure 1** :un substrat muni d'un empilement antireflet à deux couches (1a), à trois couches (1b) et à quatre couches (1c),
□ **figure 2** : un vitrage monolithique muni de deux empilements antireflet,
□ **figure 3** : un vitrage feuilleté muni de deux empilements antireflet.

La figure 1, très schématique, représente en coupe un substrat verrier surmonté d'un revêtement antireflet pyrolysé « A » selon trois variantes (les proportions entre l'épaisseur des différentes couches constituant le revêtement antireflet et celle du substrat n'ont pas été respectées pour en faciliter la lecture). Un seul empilement a été représenté, même si, comme décrit aux figures 2 et 3, un second empilement antireflet pyrolysé ou non peut être déposé sur le substrat sur sa face opposée.

Selon la variante de la figure 1a, est représenté un substrat verrier 1 qui est muni d'un revêtement bi-couches A1 comprenant une première couche 2 à fort indice surmontée d'une seconde couche 3 à faible indice. Selon la variante de la figure 1b, le même substrat 1 est muni d'un revêtement tri-couche A2 comprenant une première couche d'indice intermédiaire 4 surmontée d'une seconde couche à fort indice 5 et d'une troisième couche à faible indice 6. Selon la variante de la figure 1c, le même substrat 1 est muni d'un revêtement quadri-couches A3 comprenant une alternance de deux couches à fort indice 7, 9 et deux couches à faible indice 8, 10.

Dans tous les exemples suivants, les couches des revêtements A1, A2 ou A3 sont obtenues par une technique de pyrolyse en phase liquide, pulvérulente, gazeuse, directement sur le ruban de verre float.

Ci-après sont indiqués, de manière non exhaustive, les précurseurs adéquats pour obtenir les couches d'oxyde à indice voulu :
□ les couches à faible indice du type silice sont déposées par CVD à partir de tétraorthosilicate TEOS ou de SiH₄,
□ les couches à faible indice du type oxyde mixte de silicium et d'aluminium éventuellement fluoré sont déposées par CVD à partir d'un mélange d'un précurseur de silicium comme le TEOS et d'un précuseur d'aluminium sous forme d'un organo-métallique à fonction alcoolate ou β-dicétone du type acétylacétonate ou métyl-2-heptadione 4,6, éventuellement fluoré (des précurseurs d'aluminium fluoré sont notamment choisis parmi l'acétylacétonate d'aluminium hexafluoré ou un trifluoroacétylacétonate d'aluminium, comme décrit dans la demande FR-A-2 727 107 précitée,
□ les couches à indice intermédiaire du type oxycarbure de silicium SiOₓC_{y} sont déposées également par CVD à partir d'éthylène et de SiH₄, conformément à la demande de brevet EP-A-0 518 755,
□ les couches à fort indice à base d'oxyde d'étain sont déposées par pyrolyse de poudre de dibutyldifluorure d'étain (DBTF) ou par CVD à partir de tétrachlorure d'étain,
□ les couches à fort indice à base de TiO₂ sont déposées par pyrolyse liquide à partir d'un mélange d'alcoolate et de chélate de titane dans un solvant du type acétate d'éthyle (précurseurs décrits dans le brevet EP-B-0 465 309) ou par CVD à partir tétraisopropyltitanate, ou encore par pyrolyse de poudre à partir de méthyléthyltitanate ou de Ti(OCH₃)₄. On ne rentrera pas dans les détails des conditions de dépôt de chacune de ces couches, qui sont connues de l'homme de l'art. Pour les antireflet déposés sous vide, on pourra notamment trouver des précisions dans la demande de brevet européen 96/400367.7 précitée.

La figure 2 illustre la configuration d'un vitrage selon un premier exemple 1 : il s'agit d'un vitrage dit monolithique, ne comportant qu'un seul substrat verrier muni sur sa face 1 d'un empilement antireflet « A » et sur sa face 2 d'un empilement antireflet « B » constitué de couches minces obtenues par pulvérisation cathodique. Le substrat 1 est représenté plan, mais peut également être bombé avec un rayon de courbure variable. On a généralement la face 1 tournée vers l'extérieur qui correspond alors, en cas de bombage, à la face convexe (la face 2 étant concave).

### EXEMPLE 1

→ On dépose sur ligne float sur un ruban de verre de 4 mm d'épaisseur et de nature sitico-sodo-calcique (vendu une fois découpé sous l'appellation Planilux par la société SAINT-GOBAIN VITRAGE) un premier empilement A2 pyrolysé comportant (cf. figure 1b) :
   □ une première couche à base de SiOₓC_{y} d'indice de réfraction environ 1,73 et d'épaisseur géométrique 71 nm,
   □ une seconde couche à base de TiO₂ d'indice de réfraction 2,45 et d'épaisseur géométrique 99 nm,
   □ une troisième couche à bas indice à base d'oxyde mixte SiOAIF, d'indice de réfraction 1,48 et d'épaisseur géométrique 90 nm.
→ Après découpe du ruban, on dépose sur l'autre face par pulvérisation cathodique réactive en présence d'oxygène un revêtement antireflet « B » comportant :
   □ une première couche de 18 nm d'épaisseur géométrique de SnO₂ d'indice 1,9,
   □ une seconde couche de 35 nm d'épaisseur géométrique de SiO₂ d'indice 1,45,
   □ une troisième couche de 120 nm d'épaisseur géométrique de Nb₂O₅ d'indice 2,1,
   □ une quatrième couche de 85 nm d'épaisseur géométrique de SiO₂ d'indice 1,45.

Le tableau 1 ci-dessous regroupe pour le substrat ainsi revêtu et, à titre de comparaison, pour un substrat identique mais dépourvu de tout revêtement, les valeurs spectrophotométriques suivantes mesurées sous l'illuminant D₆₅ :
T_{L} la transmission lumineuse en pourcentage à incidence normale,
T_{E} la transmission énergétique en pourcentage à incidence normale,
R_{L} la réflexion lumineuse en pourcentage à incidence normale
a*-b* les valeurs de couleur en réflexion selon le système de colorimétrie (L*, a*, b*) sans unité, T_{L}/T_{E} la sélectivité sans unité :

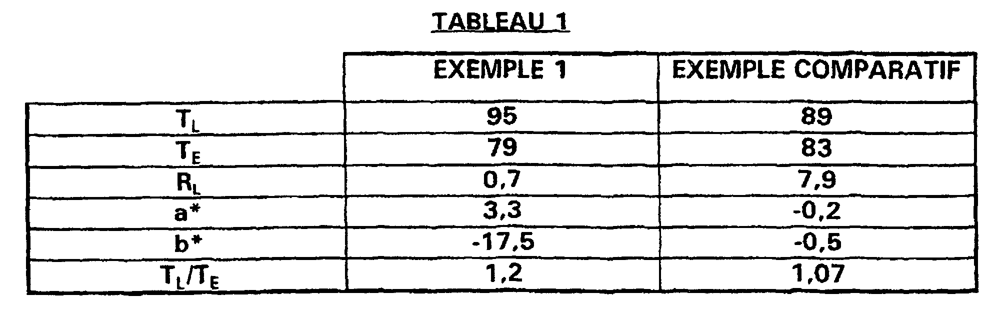

On voit donc à la lumière de ces résultats que le gain en T_{L} et en sélectivité est très significatif, que la valeur de R_{L} du substrat revêtu est inférieure à 1 %. Le substrat est donc très adapté à une application bâtiment.

Une seconde série d'exemples 2 à 10 correspond à des vitrages ayant la configuration feuilletée représentée à la figure 3 : le substrat 1 précédent est assemblé à un second substrat verrier 10 à l'aide d'une feuille 11 de PVB de 0,7 mm d'épaisseur. Ce second substrat est muni sur sa face extérieure également d'un empilement antireflet, soit pyrolysé et identique à celui dont le substrat 1 est revêtu, soit déposé sous vide et du type « B ».

Les exemples 2 à 5 utilisent deux substrats 1, 10 verriers Planilux de 4 mm d'épaisseur.

### EXEMPLE 2

Les deux empilements antireflet des substrats 1 et 10 sont identiques et toutes leurs couches sont pyrolysées. Il s'agit d'empilements bi-couches (cf. figure 1a), comprenant :
□ une première couche de TiO₂ de 12 nm d'épaisseur géométrique,
□ une seconde couche d'oxyde mixte SiOAlFₓ identique à celle de l'exemple 1 d'épaisseur géométrique 124 nm.

### EXEMPLE 3

Les deux empilements antireflet des substrats 1 et 10 sont identiques et toutes leurs couches pyrolysées. Il s'agit également d'empilements bi-couches comprenant :
□ une première couche de SnO₂ de 95 nm d'épaisseur géométrique,
□ une seconde couche de SiOAlFₓ identique à celle des exemples précédents d'épaisseur géométrique 92 nm.

### EXEMPLE 4

Les deux empilements antireflet des substrats 1 et 10 sont identiques et toutes leurs couches pyrolysées. Il s'agit d'empilements tri-couches (cf. figure 1b) de structures et d'épaisseurs de couches identiques à celles de l'exemple 1.

### EXEMPLE 5

Les deux empilements antireflet sont différents : celui du substrat 1 est un empilement bi-couche selon l'exemple 2, celui du substrat 10 est un empilement de type « B » déposé sous vide identique à celui décrit dans l'exemple 1.

Le tableau 2 ci-dessous regroupe toutes les valeurs spectrophotométriques déjà explicitées pour les exemples 2 à 4, avec, à titre de comparaison, les valeurs pour un feuilleté assemblant deux mêmes substrats verriers mais dépourvus de revêtement.

**TABLEAU 2**

| | **EX.2** | **EX. 3** | **EX. 4** | **EX. 5** | **COMPARATIF** |
|---|---|---|---|---|---|
| **T**_{**L**} | **96** | **95** | **97** | **95** | **86** |
| **T**_{**E**} | **84** | **83** | **78** | **79** | **72** |
| **R**_{**L**} | **0,9** | **1,3** | **0,4** | **1,1** | **7,6** |
| **a*** | **44** | **17,1** | **0,7** | **19,7** | **-1,0** |
| **b*** | **-40** | **-36,7** | **3** | **-25,4** | **0,1** |
| **T**_{**L**}**/T**_{**E**} | **1,14** | **1,14** | **1,24** | **1,20** | **1,18** |

De ce tableau, on voit que tous les exemples de l'invention, même ceux avec des empilements simplement bi-couches, permettent d'atteindre des valeurs de R_{L} d'au plus 1,3%, particulièrement faibles.

On peut également noter un gain en sélectivité significatif pour les exemples 4 et 5 par rapport à l'exemple comparatif, et une valeur résiduelle en réflexion particulièrement atténuée pour l'exemple 4.

Les exemples 6 à 10 utilisent un substrat 10 clair de 4 mm identique à celui utilisé dans les exemples 2 à 5, mais un substrat 1 de 4 mm teinté dans la masse à T_{E} réduite.

### EXEMPLE 6

Les empilements antireflet sont des empilements tri-couches pyrolysées identiques à ceux de l'exemple 4. Le verre du substrat 1 est conforme à l'enseignement du brevet EP-A-0 644 164 précité. Sa composition est la suivante (en pourcentages pondéraux) :

| | |
|---|---|
| SiO₂ | 70,75 % |
| Al₂O₃ | 0,62 % |
| CaO | 9,50 % |
| MgO | 3,90 % |
| Na₂O | 13,90 % |
| K₂O | 0,09 % |
| SO₃ | 0,18 % |
| Fe₂O₃ (fer total) | 0,95 % |
| FeO | 0,285 % |
| FeO (fer total) | 0,30 % |

Pris seul, sans revêtement ni montage en feuilleté, il présente une T_{L} de 71%, une T_{E} de 43,5% et une T_{UV} de 18%.

### EXEMPLE 6 COMPARATIF

Il permet de faire la comparaison avec l'exemple 6 : les substrats sont les mêmes, mais dépourvus de tout revêtement.

### EXEMPLE 7

Les empilements antireflet sont des empilements tri-couches pyrolysés identiques à ceux de l'exemple 4. Le verre du substrat 1 est de 4 mm d'épaisseur et conforme à l'enseignement de la demande de brevet PCT/FR95/00828 précitée. Les teneurs en MgO, Fe₂O₃ et FeO du verre sont les suivants (en pourcentages pondéraux) :

| | |
|---|---|
| MgO | 0,3 % |
| Fe₂O₃ | 0,20 % |
| FeO | 0,36 % |

Pris seul, sans revêtement ni montage en feuilleté, il présente une T_{L} de 81% une T_{E} de 60% et une T_{UV} de 51%.

### EXEMPLE 7 COMPARATIF

Il permet de faire la comparaison avec l'exemple 7 : les substrats sont les mêmes, mais dépourvus de tout revêtement.

Le tableau 3 ci-dessous regroupe toutes les valeurs spectrophotométriques correspondant aux exemples 6, 6 comparatif, 7 et 7 comparatif:

**TABLEAU 3**

| | **EX.6** | **EX. 6 COMPARATIF** | **EX. 7** | **EX. 7 COMPARATIF** |
|---|---|---|---|---|
| **T**_{**L**} | **73** | **67** | **88** | **81** |
| **T**_{**E**} | **37** | **37** | **58** | **60** |
| **R**_{**L**} | **0,3** | **6,5** | **0,4** | **7,8** |
| **a*** | **-1** | **-3,3** | **-0,5** | **-1,5** |
| **b*** | **-1.8** | **-0,8** | **-1,5** | **-0,6** |
| **T**_{**L**}**/T**_{**E**} | **1,94** | **1,8** | **1,52** | **1,35** |

Là encore, on constate pour les exemples conformes à l'invention, un net gain en sélectivité, avec des valeurs de R_{L} inférieures à 0,5 % et des colorations résiduelles en réflexion très peu intenses

La dernière série d'exemples 8 à 10 vise plus particulièrement une application de pare-brise feuilleté pour automobile : les deux substrats 1, 10 sont d'abord munis de leurs empilements directement sur la ligne float, puis, après découpe, sont bombés, le substrat 1 ayant sa face extérieure 1 convexe, et le substrat 10 sa face extérieure 4 concave.

Le substrat 1 est de 2,6 mm d'épaisseur et teinté dans la masse. Le substrat 10 est de 2,1 mm d'épaisseur et clair de type Planilux. La feuille 11 de PVB a toujours 0,7 mm d'épaisseur.

### EXEMPLE 8

Le substrat 1 a une composition conforme au brevet EP-0 644 164, et plus précisément la composition suivante (en proportions pondérales) :

| | |
|---|---|
| SiO₂ | 70,8 % |
| Al₂O₃ | 0,6 % |
| Na₂O | 13,8 % |
| K₂O | 0,10 % |
| CaO | 9,50 % |
| Mg | 4.10 % |
| Fe₂O₃ (fer total exprimé sous cette forme) | 0,86 % |
| TiO₂ | 0,035 % |
| SO₃ | 0,17% |
| FeO | 0,28 % |

Les deux empilements antireflet sont pyrolysés, identiques, et sous la forme d'un empilement tri-couches (cf. figure 1b) avec :
□ une première couche à base de SiOₓC_{y} d'indice 1,83 et d'épaisseur géométrique 105 nm,
□ une seconde couche à base de TiO₂ d'épaisseur géométrique 135 nm,
□ une troisième couche en SiOAlFₓ comme précédemment définie, d'indice 1,48 et d'épaisseur géométrique 107 nm.

### EXEMPLE 8 COMPARATIF

Il utilise les mêmes substrats qu'à l'exemple 8, mais dépourvus de revêtements antireflet.

### EXEMPLE 9

La seule différence d'avec l'exemple 8 est que le substrat 1 est d'avantage coloré et répond toujours à l'enseignement du brevet EP-0 644 164 avec la composition identique à celle indiquée pour l'exemple 6.

### EXEMPLE 9 COMPARATIF

II utilise un même montage feuilleté des substrats identiques à l'exemple 9 mais sans revêtement antireflet.

Le tableau 4 ci-dessous regroupe les valeurs spectrophotométriques déjà explicitées, cette fois mesurées en fonction de l'illuminant « A ». Sont également précisées les valeurs de T_{L}, T_{E}, R_{L}, a* et b* à incidence 60°:

**TABLEAU 4**

| | **EX.8** | **EX. 8 COMPARATIF** | **EX. 9** | **EX. 9 COMPARATIF** |
|---|---|---|---|---|
| **T**_{**L**} | **81** | **76** | **76** | **71** |
| **T**_{**E**} | **47** | **48** | **44** | **44** |
| **R**_{**L**} | **1,9** | **7** | **1,5** | **6,7** |
| **a*** | **57.8** | **-2,6** | **8,9** | **-3,1** |
| **b*** | **-73,6** | **0,1** | **-45,7** | **-1,1** |
| **T**_{**L**}**/T**_{**E**} | **1,72** | **1,57** | **1,7** | **1,61** |
| **T**_{**L**}**(60°)** | **73** | **66** | **68** | **61** |
| **T**_{**E**}**(60°)** | **39** | **39** | **37** | **35** |
| **R**_{**L**}**(60°)** | **6,7** | **13** | **5,1** | **12,7** |
| **a*(60°)** | **5** | **-3,1** | **2,4** | **-3,3** |
| **b*(60°)** | **-17,3** | **0,3** | **-5,9** | **-0,9** |

De ce tableau, on constate que la sélection des épaisseurs des couches des empilements a été modifiée par rapport à la série précédente, de manière à améliorer l'effet antireflet à incidence oblique, en augmentant la valeur de T_{L} de manière significative à la fois à incidence normale et à 60°. Le gain de sélectivité obtenu avec l'invention est tout particulièrement intéressant dans le domaine des véhicules, pour atténuer l'échauffement des habitacles. Du tableau 4, on voit que l'on peut, grâce à l'invention, franchir la barre des 1,8 pour la sélectivité à incidence oblique. En outre, le gain en T_{L} obtenu par les empilements selon l'invention permet d'utiliser des substrats à transmission énergétique réduite qui jusque là ne pouvaient être utilisés car ils abaissaient la valeur de T_{L} du feuilleté en-dessous de la valeur seuil imposée par les normes, de 75% : si l'on se réfère aux exemples 9 et 9 comparatif, on voit que ce sont les empilements antireflet qui permettent au vitrage de franchir cette borne des 75% de T_{L} à incidence normale : l'invention autorise donc l'utilisation pour les pare-brise de vitrages assez fortement colorés, ce qui tend là encore à réduire l'échauffement des habitacles, sans être pénalisé exagérément en terme de transparence.

Un dernier exemple 10 a été réalisé, similaire à l'exemple 8.

La seule différence réside dans l'empilement antireflet disposé en face 1 du substrat 1 : l'empilement tri-couche comporte une première couche de SiOC d'indice 1,83 et d'épaisseur géométrique 102 nm, une seconde couche de TiO₂ de 115 nm, une troisième couche de SiOAlFₓ de 80 nm d'épaisseur géométrique et d'indice 1,48, et, en plus, une dernière couche mince de 10 nm de TiO₂ déposé par CVD et partiellement cristallisée, comme décrite dans la demande FR-95/10839 précitée : on confère ainsi une fonctionnalité supplémentaire anti-salissure au pare-brise sans pénaliser de manière significative sa fonction antireflet, puisque la quatrième couche, relativement de fort indice, est cantonnée à une faible épaisseur (notamment d'au plus 20 nm).

Le tableau 5 ci-dessous regroupe les valeurs spectrophotométriques d'un tel vitrage à incidence normale ainsi qu'à incidence 60° :

| | **EX.10** |
|---|---|
| **T**_{**L**} | **77** |
| **T**_{**E**} | **46** |
| **R**_{**L**} | **6** |
| **a*** | **21,3** |
| **b*** | **-40,9** |
| **T**_{**L**}**/T**_{**E**} | **1,68** |
| **T**_{**L**}**(60°)** | **72** |
| **T**_{**E**}**(60°)** | **40** |
| **R**_{**L**}**(60°)** | **8** |
| **a*(60°)** | **-7** |
| **b*(60°)** | **-12,4** |

En dernier lieu, il est à noter que les empilements pyrolysés selon l'invention de tous les exemples précédents donnent d'excellents résultats en terme de durabilité, avec notamment une résistance au test de brouillard salin neutre selon la norme ISO 9227 d'au moins 21 jours, et une variation de T_{L} d'au plus 3 % quand on leur fait subir un test d'abrasion dit test Taber opérant 2000 rotations (test effectué à l'aide de poudre abrasive noyée dans un élastomère à l'aide d'une machine fabriquée par la société TABER Instrument Corp., machine référencée sous le modèle 174 « Standard Abrasion Tester », les meules étant de type S10F chargées de 500 grammes).

## Revendications

1. Vitrage composé d'un seul substrat verrier ou de deux substrats verriers associés dans une structure feuilletée, **caractérisé en ce qu**'il est muni sur chacune des faces extérieures dudit ou desdits substrats verriers d'un revêtement antireflet « A, A', B » composé d'un empilement de couches de matériaux diélectriques d'indices de réfraction alternativement forts et faibles, avec :
(i) 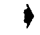 sur la première face extérieure un tel revêtement antireflet (A) dont toutes les couches de l'empilement qui le constituent sont pyrolysées, et sur la seconde face extérieure un tel revêtement antireflet (B) dont toutes les couches sont déposées sous vide, ou
(ii) 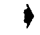 sur la première face extérieure un tel revêtement antireflet (A) dont une partie des couches de l'empilement qui le constitue sont des couches pyrolysées et le reste des couches étant déposées sous vide, et sur la seconde face extérieure un revêtement antireflet de même structure (A') ou dont l'ensemble des couches a été déposé sous vide (B),
les épaisseurs optiques des couches des empilements (A, A' ou A, B) étant sélectionnées afin d'abaisser la réflexion lumineuse RL à des valeurs inférieures à 1,5% à incidence normale.

2. Vitrage selon la revendication 1, **caractérisé en ce que** dans le cas où le(s) revêtement(s) antireflet(s) (A) comprend des couches pyrolysées et des couches sous vide, les premières couches dudit empilement (A) sont pyrolysées et **en ce que** la ou les dernières couches sont déposées sous vide.

3. Vitrage selon la revendication 1, **caractérisé en ce que** dans le cas où le(s) revêtement(s) antireftet(s) (A) comprend des couches pyrolysées et des couches sous vide, la dernière couche de l'empilement « A » est pyrolysée.

4. Vitrage selon l'une des revendications précédentes, **caractérisé en ce que** les couches (3, 6, 8, 10) à faible indice de réfraction des empilements antireflets ont un indice compris entre 1,35 et 1,70, de préférence entre 1,38 et 1,65 **et en ce que** les couches à fort indice ont un indice d'au moins 1,85, notamment compris entre 1,90 et 2,60, de préférence entre 2,10 et 2,45.

5. Vitrage selon l'une des revendications précédentes, **caractérisé en ce que** dans le revêtement antireflet « A », ou au moins un des revêtements antireflet « A », « A' » ou « B », la première séquence (7, 8) de couches « couche à fort indice/couche à faible indice » est remplacée par une couche (4) d'indice intermédiaire compris entre 1,70 et 1,85, notamment une couche à base d'oxynitrure et/ou oxycarbure de silicium SiOₓN_{y} ou une couche à base d'oxyde d'étain.

6. Vitrage selon l'une des revendications précédentes, **caractérisé en ce que** les couches (3, 6, 8, 10) à faible indice de réfraction pyrolysées sont en un matériau diélectrique ou un mélange de matériaux diélectriques choisi(s) dans le groupe comprenant l'oxyde de silicium SiO₂, l'oxynitrure et/ou l'oxycarbure de silicium SiOₓC_{y}/SiOₓN_{y}, un oxyde mixte d'oxyde de silicium et d'aluminium éventuellement halogéné de type SiAlₓO_{y}F_{z}.

7. Vitrage selon l'une des revendications précédentes, **caractérisé en ce que** les couches (2, 5, 7, 9) à fort indice de réfraction pyrolysées sont en un matériau ou un mélange de matériaux diélectriques choisi(s) dans le groupe comprenant TiO₂, SnO₂, ZnO, ZrO₂, Ta₂O₅.

8. Vitrage selon l'une des revendications précédentes, **caractérisé en ce que** le substrat verrier (1) ou au moins un des substrats verriers constitutifs (1, 10) dudit vitrage est, soit en verre clair, soit en verre à transmission énergétique réduite du type teinté dans la masse présentant notamment une transmission lumineuse T_{L} comprise entre 50 et 85% et une transmission énergétique T_{E} comprise entre 30 et 70%.

9. Vitrage selon l'une des revendications précédentes, **caractérisé en ce que** le(s) substrat(s) verrier(s) qui en fait (font) partie sont bombés et/ou traités thermiquement, notamment recuits ou trempés, le ou les revêtements antireflet étant aptes à subir ces opérations sans altération de leurs propriétés optiques.

10. Vitrage selon l'une des revendications précédentes, **caractérisé en ce qu'**il comporte également au moins un revêtement à fonction de protection solaire, composé d'une ou d'une pluralité de couches, notamment du type diélectrique / argent / diélectrique ou diélectrique / argent / diélectrique / argent / diélectrique ou encore comprenant une couche filtrante du type nitrure tel que TiN ou métal.

11. Vitrage selon l'une des revendications précédentes, **caractérisé en ce qu'**il comporte également au moins un revêtement conducteur électrique à fonction d'alarme, notamment sous la forme d'une couche conductrice ou d'un réseau de fils conducteurs.

12. Vitrage selon la revendication 10 ou 11, **caractérisé en ce qu'**il est de structure feuilletée, avec le revêtement à fonction de protection solaire et/ou le revêtement à fonction d'alarme disposé(s) sur l'une et/ou l'autre des faces internes 2, 3 des substrats verriers appartenant audit vitrage.

13. Vitrage selon l'une des revendications précédentes, **caractérisé en ce que** le revêtement antireflet « A » ou au moins un des revêtements antireflet dudit vitrage est surmonté d'un revêtement à propriétés photocatalytiques à fonction anti-salissure, notamment à base d'oxyde de titane.

14. Vitrage monolithique ou feuilleté selon l'une des revendications précédentes, **caractérisé en ce que** les épaisseurs optiques des couches du(des) empilement(s) antireflet A ,A' , A,B sont sélectionnées afin d'abaisser la réflexion lumineuse R_{L} à des valeurs inférieures à 1,0% à incidence normale.

15. Vitrage selon la revendication 14, **caractérisé en ce que** le(s) empilement(s) antireflet « A » comporte(nt) soit deux couches, dont une première couche à fort indice d'épaisseur optique comprise entre 15 et 50 nm, notamment entre 20 et 40 nm, et une seconde couche à faible indice d'épaisseur optique compris entre 160 et 200 nm, notamment entre 170 et 190 nm, soit trois couches dont une première couche d'indice intermédiaire d'épaisseur optique comprise 100 et 140 nm, notamment entre 110 et 130 nm, une seconde couche à fort indice d'épaisseur optique comprise entre 210 et 260 nm, notamment entre 230 et 250 nm et une troisième couche à faible indice d'épaisseur optique comprise entre 100 et 150 nm, notamment entre 110 et 140 nm.

16. Vitrage monolithique ou feuilleté selon l'une des revendications 1 à 14, **caractérisé en ce que** les épaisseurs optiques des couches du(des) empilement(s) antireflet « A », « A' », « B » et la nature du ou des substrats verriers sont sélectionnées afin d'abaisser la réflexion lumineuse à incidence normale à des valeurs inférieures à 7% et à incidence de 60° à des valeurs inférieures à 10%, en maintenant la transmission lumineuse T_{L} en incidence normale à des valeurs d'au moins 75% et la sélectivité T_{L}/T_{E} à des valeurs d'au moins 1,65 notamment d'au moins 1,70.

17. Vitrage selon l'une des revendications précédentes, **caractérisé en ce que** le(s) empilement(s) antireflet « A » comportent trois couches, dont une première couche d'indice intermédiaire d'épaisseur optique comprise entre 160 et 210 nm, notamment entre 180 et 200 nm, une seconde couche à fort indice d'épaisseur optique comprise entre 300 et 350 nm, notamment entre 320 et 340 nm, et une troisième couche à faible indice d'épaisseur optique comprise entre 120 et 170 nm, notamment entre 145 et 165 nm.

18. Application du vitrage selon la revendication 14 ou la revendication 15 en tant que vitrage intérieur ou extérieur pour le bâtiment, vitrine, comptoir de magasin ou pour vitrages pour véhicule tels que les vitres latérales, la lunette arrière ou le toit-auto.

19. Application du vitrage selon la revendication 16 ou 17 en tant que pare-brise, notamment feuilleté, pour véhicule du type automobile, train.

20. Application du vitrage selon l'une des revendications 1 à 18 en tant que vitrage de protection d'objets du type tableaux, d'écran de protection anti-éblouissement pour ordinateur, de verre décoratif, de mobilier verrier, de miroir,ou vitrage anti-feu, pare-flamme ou coupe-feu.

## Patentansprüche

1. Glas, das sich aus einem einzigen aus Glas bestehenden Substrat oder zwei aus Glas bestehenden Substraten, die in einer Verbundstruktur miteinander verbunden sind, zusammensetzt, **dadurch gekennzeichnet, dass** es auf jeder Außenseite des/der Glassubstrate/s mit einer Antireflexbeschichtung "A, A', B" versehen ist, die aus einem Aufbau aus Schichten aus dielektrischem Material mit abwechselnd hohem und niedrigem Brechungsindex zusammengesetzt ist, mit
(I) auf der ersten Außenseite einer solchen Antireflexbeschichtung (A), deren sämtliche Schichten des Aufbaus, die diesen bilden, durch Pyrolyse erzeugt sind, und auf der zweiten Außenseite einer solchen Antireflexbeschichtung (B), deren sämtliche Schichten im Vakuum abgeschieden sind, oder
(II) auf der ersten Außenseite einer solchen Antireflexbeschichtung (A), wovon ein Teil der Schichten des Aufbaus, der sie bildet, durch Pyrolyse erzeugte Schichten sind, und der Rest der Schichten im Vakuum abgeschieden ist, und auf der zweiten Außenseite einer Antireflexbeschichtung mit derselben Struktur (A') oder deren gesamte Schichten im Vakuum abgeschieden sind (B),
wobei die optischen Dicken der Schichten der Aufbauten (A, A' oder A, B) ausgewählt sind, um den Lichtreflexionsgrad R_{L} auf Werte von unter 1,5 % bei senkrechtem Lichteinfall zu senken.

2. Glas nach Anspruch 1, **dadurch gekennzeichnet, dass** dann, wenn die Antireflexbeschichtung/en (A) durch Pyrolyse und im Vakuum abgeschiedene Schichten umfasst/umfassen, die ersten Schichten des Aufbaus (A) durch Pyrolyse abgeschieden sind, **und dass** die letzte/n Schicht/en im Vakuum abgeschieden ist/sind.

3. Glas nach Anspruch 1, **dadurch gekennzeichnet, dass** dann, wenn die Antireflexbeschichtung/en (A) durch Pyrolyse und im Vakuum abgeschiedene Schichten umfasst/umfassen, die letzte Schicht des Aufbaus "A" durch Pyrolyse erzeugt ist.

4. Glas nach einem der vorhergehenden Ansprüche, **dadurch gekennzeichnet, dass** die Schichten (3, 6, 8, 10) mit niedrigem Brechungsindex der Antireflexaufbauten einen Brechungsindex von 1,35 bis 1,70 und vorzugsweise zwischen 1,38 und 1,65 besitzen, **und dass** die Schichten mit hohem Brechungsindex einen Brechungsindex von mindestens 1,85, insbesondere von 1,90 bis 2,60, und vorzugsweise zwischen 2,10 bis 2,45 besitzen.

5. Glas nach einem der vorhergehenden Ansprüche, **dadurch gekennzeichnet, dass** in der Antireflexbeschichtung "A" oder in mindestens einer der Antireflexbeschichtungen "A", "A'" oder "B" die erste Abfolge (7, 8) aus Schichten "Schicht mit hohem Brechungsindex/Schicht mit niedrigem Brechungsindex" durch eine Schicht (4) mit einem dazwischen liegenden Brechungsindex von 1,70 bis 1,85 und insbesondere eine Schicht auf der Basis von Siliciumnitridoxid, SiOₓN_{y}, und/oder Siliciumcarbidoxid oder eine Schicht auf der Basis von Zinnoxid ersetzt ist.

6. Glas nach einem der vorhergehenden Ansprüche, **dadurch gekennzeichnet, dass** die durch Pyrolyse erzeugten Schichten (3, 6, 8, 10) mit niedrigem Brechungsindex aus einem dielektrischen Material oder einem Gemisch aus dielektrischen Materialien bestehen, das/die aus der Gruppe ausgewählt ist/sind, die Siliciumoxid, SiO₂, Siliciumnitridoxid und/oder Siliciumcarbidoxid, SiOₓN_{y}/SiOₓC_{y}, und ein gegebenenfalls halogeniertes Mischoxid aus Siliciumoxid und Aluminiumoxid vom Typ SiAlₓO_{y}F_{z} umfasst.

7. Glas nach einem der vorhergehenden Ansprüche, **dadurch gekennzeichnet, dass** die durch Pyrolyse erzeugten Schichten (2, 5, 7, 9) mit hohem Brechungsindex aus einem dielektrischen Material oder einem Gemisch aus dielektrischen Materialien bestehen, das/die aus der Gruppe ausgewählt ist/sind, die TiO₂, SnO₂, ZnO, ZrO₂ und Ta₂O₅ umfasst.

8. Glas nach einem der vorhergehenden Ansprüche, **dadurch gekennzeichnet, dass** das Glassubstrat (1) oder mindestens eines der Glassubstrate (1, 10), das/die das Glas bildet/bilden, entweder aus einem Klarglas oder einem Glas mit verringertem Strahlungstransmissionsgrad vom Typ in der Masse gefärbtes Glas besteht, das insbesondere einen Lichttransmissionsgrad T_{L} von 50 bis 85 % und einen Strahlungstransmissionsgrad T_{E} von 30 bis 70 % aufweist.

9. Glas nach einem der vorhergehenden Ansprüche, **dadurch gekennzeichnet, dass** das/die Glassubstrat/e, das/die einen Bestandteil davon bildet/bilden, gebogen und/oder wärmebehandelt, insbesondere im Kühlofen abgekühlt oder vorgespannt, ist/sind, wobei die Antireflexbeschichtung/en in der Lage ist/sind, diesen Arbeitsgängen ohne Veränderung ihrer optischen Eigenschaften unterworfen zu werden.

10. Glas nach einem der vorhergehenden Ansprüche, **dadurch gekennzeichnet, dass** es auch mindestens eine Beschichtung mit Sonnenschutzfunktion, die aus einer oder mehreren Schichten, insbesondere vom Typ Dielektrikum/Silber/Dielektrikum oder Dielektrikum/Silber/Dielektrikum/Silber/Dielektrikum, zusammengesetzt ist, oder noch eine filternde Schicht vom Typ Nitrid wie TiN oder Metall umfasst.

11. Glas nach einem der vorhergehenden Ansprüche, **dadurch gekennzeichnet, dass** es weiterhin mindestens eine elektrisch leitfähige Beschichtung mit Alarmfunktion, insbesondere in Form einer leitfähigen Schicht oder eines Netzes aus leitfähigen Drähten, umfasst.

12. Glas nach Anspruch 10 oder 11, **dadurch gekennzeichnet, dass** es eine Verbundstruktur besitzt, wobei die Beschichtung mit Sonnenschutzfunktion und/oder die Beschichtung mit Alarmfunktion auf der einen und/oder der anderen der Innenseiten 2, 3 der dieses Glas aufbauenden Glassubstrate angeordnet ist/sind.

13. Glas nach einem der vorhergehenden Ansprüche, **dadurch gekennzeichnet, dass** die Antireflexbeschichtung "A" oder mindestens eine der Antireflexbeschichtungen des Glases mit einer Beschichtung mit photokatalytischen Eigenschaften mit schmutzabweisender Funktion, insbesondere auf der Basis Titanoxid, überzogen ist.

14. Monolithisches oder Verbundglas nach einem der vorhergehenden Ansprüche, **dadurch gekennzeichnet, dass** die optischen Dicken der Schichten des/der Antireflexaufbaus/ Antireflexaufbauten A,A', A,B ausgewählt werden, um den Lichtreflexionsgrad R_{L} auf Werte von unter 1,0 % bei senkrechtem Lichteinfall zu senken.

15. Glas nach Anspruch 14, **dadurch gekennzeichnet, dass** der/die Antireflexaufbau/ten "A" entweder zwei Schichten, davon eine erste Schicht mit hohem Brechungsindex und einer optischen Dicke von 15 bis 50 nm, insbesondere zwischen 20 und 40 nm, und eine zweite Schicht mit niedrigem Brechungsindex und einer optischen Dicke von 160 bis 200 nm, insbesondere zwischen 170 bis 190 nm, oder drei Schichten, davon eine erste Schicht mit einem Zwischen-Brechungsindex und einer optischen Dicke von 100 bis 140 nm, insbesondere zwischen 110 und 130 nm, eine zweite Schicht mit hohem Brechungsindex und einer optischen Dicke von 210 bis 260 nm, insbesondere zwischen 230 und 250 nm, und eine dritte Schicht mit niedrigem Brechungsindex und einer optischen Dicke von 100 bis 150 nm, insbesondere zwischen 110 und 140 nm, umfasst/umfassen.

16. Monolithisches oder Verbundglas nach einem der Ansprüche 1 bis 14, **dadurch gekennzeichnet, dass** die optischen Dicken der Schichten des/der Antireflexaufbaus/Antireflexaufbauten "A", "A'", "B" und der Charakter des/der Glassubstrate/s ausgewählt werden, um den Lichtreflexionsgrad bei senkrechtem Lichteinfall auf Werte von unter 7 % und bei einem Lichteinfall mit 60° auf Werte von unter 10 % zu senken, wobei der Lichttransmissionsgrad T_{L} bei senkrechtem Lichteinfall auf Werte von mindestens 75 % und die Selektivitätskennzahl T_{L}/T_{E} auf Werten von mindestens 1,65 und insbesondere von 1,70 gehalten wird.

17. Glas nach einem der vorhergehenden Ansprüche, **dadurch gekennzeichnet, dass** der/die Antireflexaufbau/ten "A" drei Schichten umfasst/umfassen, davon eine erste Schicht mit einem Zwischen-Brechungsindex und einer optischen Dicke von 160 bis 210 nm, insbesondere zwischen 180 und 200 nm, eine zweite Schicht mit hohem Brechungsindex und einer optischen Dicke von 300 bis 350 nm, insbesondere zwischen 320 und 340 nm, und eine dritte Schicht mit niedrigem Brechungsindex und einer optischen Dicke von 120 bis 170 nm, insbesondere zwischen 145 und 165 nm.

18. Verwendung des Glases nach Anspruch 14 oder 15 als Innenoder Außenverglasung für Gebäude, für Schaufenster und Ladentheken oder Fahrzeugverglasungen wie Seitenscheiben, Heckscheiben bzw. Autodächer.

19. Verwendung des Glases nach Anspruch 16 oder 17 als insbesondere eine Verbundstruktur aufweisende Frontscheibe für Fahrzeuge wie Kraftfahrzeuge und Eisenbahnzüge.

20. Verwendung des Glases nach einem der Ansprüche 1 bis 18 als Schutzverglasung für Objekte wie Bilder, entspiegelnden Schutz für Computerbildschirme und als Zierglas, für Glasmöbel/ Spiegel oder Brandschutzverglasungen, feuerhemmende bzw. feuerwiderstandsfähige Verglasungen.

## Claims

1. Glazing pane composed of a single glass substrate or two glass substrates combined in a laminated structure, **characterised in that** it is provided, on each of the external faces of the said glass substrate or substrates, with a non-reflecting coating "A, A', B" composed of a stack of layers of dielectric materials with alternately high and low refractive indices, with:
(i) on the first external face, a non-reflecting coating (A) of this type where all the layers in the stack which make it up are pyrolysed, and on the second external face a non-reflecting coating (B) of this type where all the layers are deposited under vacuum, or
(ii) on the first external face, a non-reflecting coating (A) of this type where some of the layers in the stack which make it up are pyrolysed layers and the remainder of the layers being deposited under vacuum, and on the second external face a non-reflecting coating with the same structure (A') or where all the layers have been deposited under vacuum (B),
the optical thicknesses of the layers in the stacks (A, A' or A, B) being selected so as to reduce the light reflection RL to values of less than 1.5% at normal incidence.

2. Glazing pane according to Claim 1, **characterised in that** in the case where the non-reflecting coating or coatings (A) comprise pyrolysed layers and layers under vacuum, the first layers in the said stack (A) are pyrolysed and **in that** the last layer or layers are deposited under vacuum.

3. Glazing pane according to Claim 1, **characterised in that**, in the case where the non-reflecting coating or coatings (A) comprise pyrolysed layers and layers under vacuum, the last layer in the stack (A) is pyrolysed.

4. Glazing pane according to one of the preceding claims, **characterised in that** the layers (3, 6, 8, 10) with a low refractive index in the non-reflecting stacks have an index of between 1.35 and 1.70, preferably between 1.38 and 1.65, and **in that** the layers with a high index have an index of at least 1.85, in particular between 1.90 and 2.60, preferably between 2.10 and 2.45.

5. Glazing pane according to one of the preceding claims, **characterised in that**, in the non-reflective coating "A", or at least one of the non-reflecting coatings "A", "A'" or "B", the first sequence (7, 8) of "layer with high index/layer with low index" layers is replaced with a layer (4) with an intermediate index of between 1.70 and 1.85, in particular a layer based on silicon oxynitride and/or silicon oxycarbide SiOₓN_{y} or a layer based on tin oxide.

6. Glazing pane according to one of the preceding claims, **characterised in that** the pyrolysed layers (3, 6, 8, 10) with a low refractive index are made from a dielectric material or a mixture of dielectric materials chosen from the group comprising silicon oxide SiO₂, silicon oxynitride and/or oxycarbide SiOₓC_{y}/SiOₓN_{y}, a mixed oxide of silicon and aluminium oxide, possibly halogenated, of the SiAlₓO_{y}F_{z} type.

7. Glazing pane according to one of the preceding claims, **characterised in that** the pyrolysed layers (2, 5, 7, 9) with a high refractive index are made from a dielectric material or a mixture of dielectric materials chosen from the group comprising TiO₂, SnO₂, ZnO, ZrO₂, Ta₂O₅.

8. Glazing pane according to one of the preceding claims, **characterised in that** the glass substrate (1) or at least one of the glass substrates (1, 10) making up the said glazing pane is either made from clear glass or made from glass with a low energy transmission of the self-coloured type having in particular a light transmission T_{L} of between 50% and 85% and an energy transmission T_{E} of between 30% and 70%.

9. Glazing pane according to one of the preceding claims, **characterised in that** the glass substrate or substrates which form part of it are curved and/or heat treated, in particular annealed or toughened, the non-reflecting coating or coatings being able to be subjected to these operations without impairment of their optical properties.

10. Glazing pane according to one of the preceding claims, **characterised in that** it also comprises at least one coating with a solar protection function, composed of a layer or plurality of layers, in particular of the dielectric/silver/dielectric or dielectric/silver/dielectric/silver/dielectric type or comprising a filtering layer of the nitride type such as TiN or metal.

11. Glazing pane according to one of the preceding claims, **characterised in that** it also comprises at least one electrically conductive coating with an alarm function, in particular in the form of a conductive layer or a network of conductive wires.

12. Glazing pane according to Claim 10 or 11, **characterised in that** it has a laminated structure, with the coating with a solar protection function and/or the coating with an alarm function disposed on one or other or both of the internal faces 2, 3 of the glass substrates belonging to the said glazing pane.

13. Glazing pane according to one of the preceding claims, **characterised in that** the non-reflecting coating "A" or at least one of the non-reflecting coatings of the said glazing pane is surmounted by a coating with photocatalytic properties with an antisoiling function, in particular based on titanium oxide.

14. Single-piece or laminated glazing pane according to one of the preceding claims, **characterised in that** the optical thicknesses of the layers in the non-reflecting stack or stacks A,A', A,B are selected so as to reduce the light reflection R_{L} to values below 1.0% at normal incidence.

15. Glazing pane according to Claim 14, **characterised in that** the non-reflecting stack or stacks "A" comprise either two layers including a first layer with a high optical thickness index of between 15 and 50 nm, in particular between 20 and 40 nm, and a second layer with a low optical thickness index of between 160 and 200 nm, in particular between 170 and 190 nm, or three layers including a first layer with an intermediate optical thickness index of between 100 and 140 nm, in particular between 110 and 130 nm, a second layer with a high optical thickness index of between 210 and 260 nm, in particular between 230 and 250 nm, and a third layer with a low optical thickness index of between 100 and 150 nm, in particular between 110 and 140 nm.

16. Single-piece or laminated glazing pane according to one of Claims 1 to 14, **characterised in that** the optical thicknesses of the layers in the said non-reflecting stack or stacks "A", "A'", "B" and the nature of the glass substrate or substrates are selected so as to reduce the light reflection at normal incidence to values of below 7% and at an incidence of 60° to values of below 10%, and maintaining the light transmission T_{L} in normal incidence to values of at least 75% and the T_{L}/T_{E} selectivity to values of at least 1.65, in particular at least 1.70.

17. Glazing pane according to one of the preceding claims, **characterised in that** the non-reflecting stack or stacks "A" comprise three layers, including a first layer with an intermediate optical thickness index of between 160 and 210 nm, in particular between 180 and 200 nm, a second layer with a high optical thickness index of between 300 and 350 nm, in particular between 320 and 340 nm, and a third layer with a low optical thickness index of between 120 and 170 nm, in particular between 145 and 165 nm.

18. Application of the glazing pane according to Claim 14 or Claim 15 as an internal or external glazing pane for buildings, shop windows or shop counters or for glazing panes for vehicles such as side windows, the back window or the sun roof.

19. Application of the glazing pane according to Claim 16 or 17 as a windscreen, in particular laminated, for a vehicle of the car or train type.

20. Application of the glazing pane according to one of Claims 1 to 18 as a protective glazing for objects of the picture, anti-dazzle protective screen for computers, decorative glass, glass furniture or mirror type or glazing of the fireproof, flame-retardant or fire-resisting type.
